(19) Europäisches Patentamt
European Patent Office
Office européen des brevets

(11) **EP 2 750 368 B1**

(12) **FASCICULE DE BREVET EUROPEEN**

(45) Date de publication et mention
de la délivrance du brevet:
**29.03.2017 Bulletin 2017/13**

(21) Numéro de dépôt: **13199348.7**

(22) Date de dépôt: **23.12.2013**

(51) Int Cl.:
*H04N 5/04* (2006.01)     *H04L 27/04* (2006.01)
*H04B 7/185* (2006.01)     *H04B 7/212* (2006.01)
*H04L 1/00* (2006.01)     *H04N 21/2383* (2011.01)
*H04N 21/438* (2011.01)     *H04L 27/00* (2006.01)
*H04L 27/22* (2006.01)     *H04L 27/26* (2006.01)
*H04L 27/38* (2006.01)     *H04N 21/236* (2011.01)
*H04N 21/61* (2011.01)     *H04N 21/6338* (2011.01)
*H04N 21/643* (2011.01)

(54) **Procédé et système pour la synchronisation de trames DVB-S2 et sa structure de trame associée**

Verfahren und System zur Synchronisierung von DVB-S2-Datenübertragungsblöcken, und ihre entsprechende Blockstruktur

Synchronisation method and system for DVB-S2 frames and related frame structure

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2012 FR 1203616**

(43) Date de publication de la demande:
**02.07.2014 Bulletin 2014/27**

(73) Titulaire: **Thales**
**92400 Courbevoie (FR)**

(72) Inventeurs:
• **Touret, Marc**
**92622 GENNEVILLIERS Cedex (FR)**

• **Gourlaouen, Katy**
**92622 GENNEVILLIERS Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2009/091931     FR-A1- 2 926 691**
**US-A1- 2007 248 076     US-A1- 2010 046 415**
**US-A1- 2010 158 091     US-A1- 2010 166 008**

## Description

L'invention concerne un système, un procédé pour permettre de synchroniser temporellement N porteuses DVB-S2 avec N supérieur ou égal à deux et une structure de trame associée. Elle se situe notamment dans le domaine des transmissions par satellite, bandes C, X, Ku et Ka.

Les ressources fréquentielles sont relativement rares et chères. Le déploiement d'un réseau consiste, entre autres, à calculer au mieux la bande passante nécessaire à chaque émetteur. En mode opérationnel, lorsqu'un émetteur ou utilisateur n'a pas besoin de ses ressources, il est opportun qu'il puisse les prêter à un autre qui n'a pas assez de ses propres ressources pour transmettre toutes ses données. Les pics de débit d'un émetteur seront ainsi absorbés par les creux de débit d'un autre.

La norme DVB-S2 a été développée pour des applications civiles à très haut débit, par exemple pour la télévision. Une fois configurée, une porteuse DVB-S2 fonctionne avec un rythme symbole fixe, c'est-à-dire une bande passante fixe. La seule adaptation possible connue à ce jour est de changer trame par trame le couple modulation codage (MODCOD), ceci offrant l'avantage de résister à des changements de conditions de propagation ayant une dynamique de 15dB. Ce mode de modulation codage adaptatif (en anglo-saxon adaptive coding & modulation) est intrinsèque à la norme mais nécessite un canal de retour pour informer l'émetteur DVB-S2 des conditions de propagation vues par le récepteur. D'une trame à l'autre, le MODCOD peut être différent et donc l'efficacité spectrale aussi. En DVB-S2, une trame normale transporte toujours 64800 bits et ceci indépendamment du MODCOD utilisé. Il en résulte qu'une trame DVB-S2 n'a pas un nombre de symboles fixes et donc une durée fixe. Le tableau 1 donne pour les trames DVB-S2 dite « normale », le nombre de symboles suivant la modulation et la présence ou non de symboles pilotes.

|          | Sans Pilote | Avec Pilote |
|----------|-------------|-------------|
| QPSK     | 32490       | 33282       |
| 8 PSK    | 21690       | 22194       |
| 16 APSK  | 16290       | 16686       |

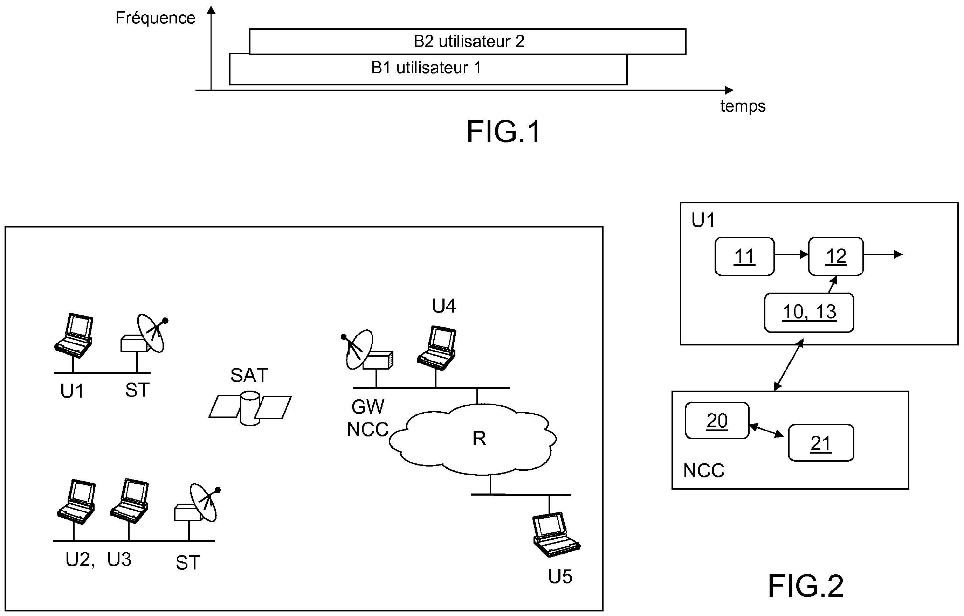

Les trames ayant des durées différentes, il n'est pas envisageable actuellement de synchroniser temporellement deux porteuses DVB-S2. Il n'est ainsi pas possible de définir un plan de fréquences qui demande une synchronisation des trames. La figure 1 schématise la distribution dans le temps des fréquences pour plusieurs terminaux. Ainsi, le terminal utilisateur 1 a une bande utilisateur B1, le terminal utilisateur 2 a une bande de fréquences B2. Chaque terminal a une bande pré-allouée valable le temps de sa mission.

Le mécanisme d'adaptation dynamique de débit, connu sous l'abrégé anglo-saxon DRA, ne peut être déployé dans ce cas, il n'est donc pas possible pour un réseau DVB-S2 de partager ses ressources.

Une solution pour remédier à ce problème pourrait être de contraindre toutes les porteuses à un unique couple modulation/pilote, par exemple une modulation par déplacement de phase sans pilote ou QPSK (Quadrature phase-shift keying), mais l'intérêt est fortement limité.

L'absence de synchronisme actuel dans les systèmes et procédés connus, empêche aussi le chiffrement du flux DVB-S2 avec marquant implicite ou Transec, les techniques de TRANSEC DVB-S2 nécessitant la transmission du marquant en clair, ce qui est une faille au niveau de la sécurité.

Il existe donc un besoin de disposer d'un système et d'un procédé permettant d'obtenir un échange dynamique des ressources fréquentielles dans un système utilisant la norme DVB-S2, et de fait de disposer d'une trame ayant une structure adaptée.

Dans la suite de la description, les expressions suivantes seront utilisées :

- « dummy » trame pour trame muette, utilisée lorsqu'il n'y a pas d'informations ou de données à transmettre, et « dummy slots » pour des créneaux temporels muets,
- Super-trame ST, constituée de plusieurs trames DVB-S2 pour un utilisateur, les trames pouvant être séparées ou non par des « dummy « trames, une super-trame constitue l'entité de base pour laquelle toutes les trames DVB-S2 d'un utilisateur Uk ont le même MODCOD,
- Jumbo-trame JT constituée de plusieurs super-trames, une jumbo-trame constitue l'entité temporelle pour laquelle toutes les trames DVB-S2 d'un utilisateur Uk ont le même débit symbolique,
- le mot « slot » définit un créneau temporel,
- PSK correspond à une modulation par changement de phase ou Phase-Shift Keying, QPSK à 4 PSK, APSK une modulation par changement d'amplitude ou de phase ou Amplitude Phase-Shift Keying.

L'expression « structure de trame de durée fixe » correspond à une structure de trame qui présente une même durée pour plusieurs utilisateurs.

L'idée de la présente invention repose principalement sur la définition d'une nouvelle structure temporelle répondant notamment aux exigences suivantes :

- la structure des trames DVB-S2 ne doit pas être modifiée, de façon à avoir un impact minimal sur la norme, et par conséquent sur les briques technologiques existantes DVB-S2,
- la durée de la structure temporelle doit permettre d'être réactif aux besoins des différents terminaux en redistribuant rapidement les ressources satellites.

L'invention concerne un système de communication utilisant la norme DVB-S2, ledit système comportant au moins k utilisateurs $U_k$, un moyen de gestion et contrôle caractérisé en ce que :

- la super-trame ST1 associée à un premier utilisateur U1 est composée d'au moins une trame T1 composée d'au moins un en-tête, d'une partie données, ladite super-trame ST1 comprenant un nombre d1 de « dummy » trames de taille variables constituées de s1 slots,
- la super-trame ST2 associée à un deuxième utilisateur U2 est composée d'au moins une trame T2 composée d'au moins un en-tête, d'une partie données, ladite super-trame ST2 comprenant un nombre d2 de « dummy » trames de taille variables constituées de s2 slots,
- ledit module de gestion et de contrôle est adapté à déterminer dynamiquement le nombre d1 et le nombre d2 de « dummy » trames à introduire afin que la durée temporelle de ST2 soit égale à la durée temporelle de ST1,
- chaque utilisateur $U_k$ utilise une super-trame $ST_k$, ayant une même durée, une super-trame est définie en tenant compte de la bande minimale B du système et les super-trames $ST_k$ de bande nB sont obtenues en multipliant par n le nombre de trames par super-trames de bande B.

Les « dummy » trames de taille variables sont, par exemple, constituées de slots de 90 symboles.

Les « dummy » slots ou créneaux muets sont, par exemple, répartis uniformément dans une super-trame.

Les « dummy » slots peuvent être répartis à la fin d'une super-trame ST composée.

Le système comprend, par exemple, un module adapté à introduire un nombre de créneaux muets entre deux jumbo-trames.

Le système comprend, par exemple, un module adapté à introduire au niveau de l'en-tête d'une trame une signalisation associée au nombre de créneaux muets.

Les trames sont, par exemple, des trames avec pilotes.

Les trames peuvent être des trames QPSK, 8 PSK, 16 APSK, 32 APM.

Un utilisateur du système est, par exemple, un drone.

L'invention concerne un procédé pour construire une super trame destinée à être utilisée dans un système utilisant la norme DVB-S2 comportant au moins k utilisateurs $U_k$, un moyen de gestion et contrôle caractérisé en ce qu'il comporte au moins les étapes suivantes :

- définir une première super-trame ST1 associée à un premier utilisateur U1 composée d'au moins un en-tête, d'une partie données, ladite super-trame ST1 comprenant un nombre d1 de « dummy » trames de taille variables constituées de s1 slots,
- définir une deuxième super-trame ST2 associée à un deuxième utilisateur U2 composée d'au moins un en-tête, d'une partie données, ladite super-trame ST2 comprenant un nombre d2 de « dummy » trames de taille variables constituées de s2 slots,
- déterminer le nombre d1 et le nombre d2 de dummy trames à introduire afin que la durée temporelle de ST2 soit égale à la durée temporelle de ST1,
- définir une super-trame ST en exécutant, par exemple, les étapes suivantes;

  - on définit la structure d'une super-trame ST pour la bande B minimale du système,
  - on obtient la structure pour les super-trames ST de bandes n.B en multipliant par n le nombre de trames par super-trame de bande B.

Pour une supertrame ST de K slots de 90 symboles, alors dans la bande n.B pour obtenir la même durée on introduit n.K slots de 90 symboles,

Selon une variante du procédé est possible de compléter une super-trame avec des créneaux muets.

L'invention concerne une structure de trame pour être utilisée dans des systèmes de communication utilisant la norme DVB-S2 caractérisée en ce qu'elle comporte un nombre de trames et un nombre de « dummy » trames disposées de façon à obtenir une super-trame de durée fixe et en ce que la durée de la super-trame obtenue est identique pour plusieurs utilisateurs en communication quelque soit la bande allouée.

D'autres caractéristiques et avantages de la présente invention apparaîtront mieux à la lecture de la description donnée à titre illustratif et nullement limitatif, annexée des figures qui représentent :

- La figure 1, une représentation du plan de fréquence pour la norme DVB-S2 classique,
- La figure 2, un exemple de système pour la construction d'une structure de trame selon l'invention,
- La figure 3, une représentation d'un plan de fréquences avec l'utilisation de trames DVB-S2 selon l'invention,
- La figure 4, une représentation des supertames et des jumbo-trames selon l'invention,
- La figure 5, un exemple de configuration de super-trames multi-ACM,
- La figure 6, un exemple de construction de plan de fréquences,
- La figure 7, une application de l'invention à des drones.

La figure 2 schématise un exemple de système permettant la mise en oeuvre du procédé selon l'invention dans le but notamment d'obtenir une structure de trame qui va permettre de diviser dynamiquement le plan temps fréquence et de l'allouer aux différents utilisateurs du système en fonction de leur besoin en débit et de leur bilan de liaison.

Les terminaux satellites se comportent comme des routeurs d'accès à la voie de retour pour le trafic utilisateur. La passerelle GTW d'un système centralise l'ensemble du trafic dans le réseau satellite et établit l'interconnexion entre les réseaux terrestres. Une unité de centre de contrôle réseau NCC est chargée de la gestion des ressources du réseau satellite. Cette fonction peut être effectuée au sol et couplée au gateway.

Sur la figure 2 sont représentés plusieurs utilisateurs, U1, U2, ...U5 en liaison avec un satellite SAT. Les utilisateurs se partagent une bande de fréquence totale Btotale. Une station Ui a une bande Bi qui peut changer selon la trame. Pendant la jumbo-trame JTR1, la station U1 a, par exemple la bande B1 pour la communication, et la station U2, la bande B2. Lors de la deuxième jumbo-trame, les stations U1, U2 peuvent avoir échangées leur bande, U1 utilisant la bande B2 et U2 la bande B1. L'échange de bandes se fait entre deux jumbo-trames JT, alors que le changement de schéma de modulation codage MODCOD ou structure de la super-trame se fait entre deux supertrames ST.

L'utilisateur U1 comporte par exemple un émetteur/récepteur 10, un premier module 11 de communication permettant les échanges entre stations, par exemple, un modulateur-démodulateur 12 ayant pour fonction de faire varier la modulation utilisée selon les besoins de l'utilisateur, un module 13 intégré au niveau de l'émetteur/récepteur 10, recevant les informations du centre de contrôle réseau NCC pour l'insertion des trames supplémentaires comme il sera décrit par la suite afin d'obtenir des structures de trames présentant une durée temporelle donnée. Les informations provenant du NCC sont transmises via le trafic DVB-S2.

Les autres utilisateurs du système comportent au moins les éléments et modules décrits pour le premier utilisateur U1.

Le centre de contrôle réseau NCC comprend, par exemple, des moyens de collecte 20 des besoins de charge des utilisateurs et de répartition des créneaux temps/fréquence en fonction des besoins des utilisateurs. Le centre de contrôle réseau NCC comprend aussi des moyens 21 adaptés pour définir le nombre de « dummy » trames à ajouter au niveau d'une trame pour obtenir une structure temporelle fixe pour tous les utilisateurs sur une plage de temps donnée.

Sans sortir du cadre de l'invention, la présence d'un NCC n'est pas indispensable pour le fonctionnement du système et du procédé. A partir du moment où un utilisateur connaît la longueur temporel de la ST pour une bande B, il peut construire cette ST lui même et décider où insérer le dummy trame. Il peut aussi y avoir des schéma préfédinis, cette dernière solution étant plus simple. Comme le NCC est la seule entité du système à recevoir l'ensemble des informations de besoins en bande et de C/No des différents utilisateurs, il va indiquer aux utilisateurs quel schéma de modulation & codage (MODCOD) et quelle bande ils doivent utiliser. Il peut donc aussi indiquer la structure de ST ou un identifiant de structure, dans le cas où l'on définit un 'dictionnaire' commun de structure de ST pour le système soit de manière statique soit dynamique.

La figue 3 représente un exemple d'attribution dans le temps des fréquences en fonction d'un utilisateur en utilisant des structures de trames DVB-S2.

Les trames « normales » DVB-S2 ne sont pas de même longueur suivant le type de modulation, par exemple :

Une trame QPSK est faite de 361 slots de 90 symboles ;
Une trame 8PSK est faite de 241 slots de 90 symboles.

361 et 241 étant des nombres premier entre eux, l'alignement temporel des trames n'est pas réaliste.

En plus des trames de trafic, la norme DVB-S2 prévoit des « dummy » trames de 37 slots de 90 symboles utilisables lorsqu'il n'y a rien à émettre.

L'idée du procédé selon l'invention consiste à définir un nouveau type de « dummy » trame de n, avec n>0, créneaux temporels ou slots, de 90 symboles utilisables lorsqu'il n'y a rien à émettre, pour une « dummy » trame classique n=37.

L'idée du procédé selon l'invention consiste à insérer au niveau d'une super-trame ST, un nombre d de « dummy trames », chacune ayant une longueur $n_i$, afin que chaque utilisateur Uk du système utilise une super-trame STk ayant une même durée. L'insertion astucieuse de ces « dummy » trames permet d'aligner temporellement les trames ou super-trames de trafic entre elles pour plusieurs utilisateurs et ainsi de permettre la synchronisation de plusieurs porteuses.

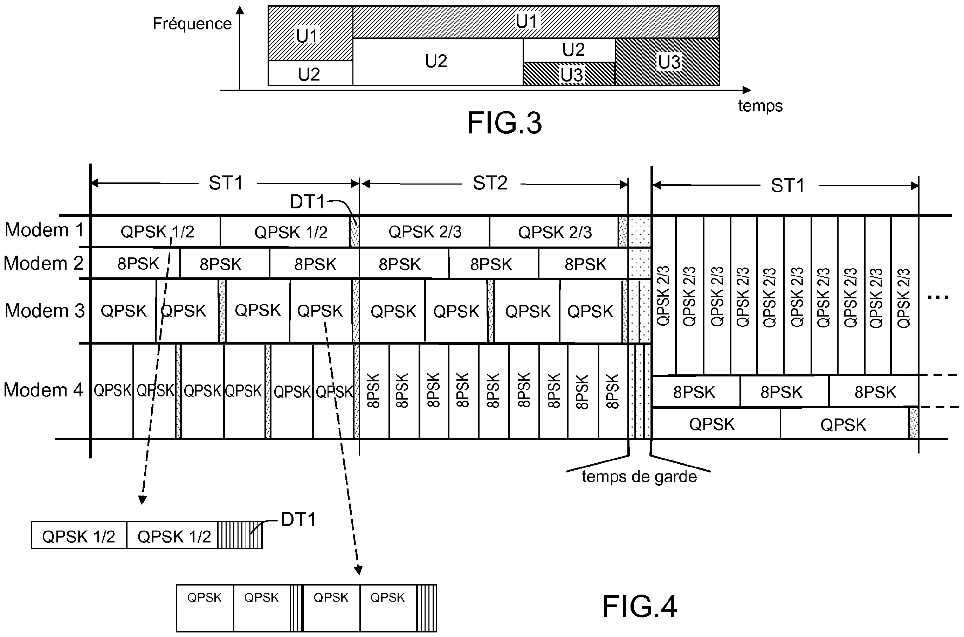

La figure 3 illustre une application à 4 modems pour 4 utilisateurs qui se partagent une même bande de fréquence Btotale =7B.

- A la jumbo-trame N :

    ◦ les 4 modems occupent chacun une bande :

        ■ B pour les modems 1 et 2
        ■ 2.B pour le modem 3
        ■ 3.B pour le modem 4

    ◦ Le modem 1 change de codage entre la ST 1 et la ST 2

Le changement dynamique de fréquence et de bande se fait pendant le temps de garde Tg entre 2 jumbo-trames. Il est ici constitué de « dummy » trame 'classique' de 37 slots.

Sur la figure 4, on remarque que :

- pour l'utilisateur U1, une « dummy » trame DT1 a été ajoutée après les deux trames QPSK ½ afin d'obtenir une super-trame ST1,
- pour l'utilisateur U2, aucune « dummy » trame n'est ajoutée,
- pour l'utilisateur U3, une « dummy » trame DT31 est ajoutée après deux trames QPSK, puis une deuxième « dummy « trame DT32 est ajoutée après deux trames QPSK, afin que la durée temporelle de l'ensemble corresponde à la super-trame ST1,
- pour l'utilisateur U4, une première dummy trame DT41 est ajoutée après deux modulations QPSK, puis une deuxième DT42 est ajoutée après deux trames QPSK, puis une troisième DT43 est ajoutée après deux trames QPSK, l'ensemble des trames et dummy trames formant une super-trame de durée temporelle ST1.

L'ajout de ces « dummy » trame DT permet un alignement temporel de super-trame et rend possible le partage dynamique et synchrone de ressources entres les utilisateurs Uk. Les utilisateurs, dans cet exemple, continuent à émettre sans changer de modulation entre super trames STi. Cependant, des modifications éventuelles dans le type de modulation employée par les utilisateurs peuvent être effectuées entre 2 super trames.

L'ensemble des deux super trames ST1 et ST2 forme une jumbo-trame JT. Entre deux jumbo trames on introduit un temps de garde Tg qui va être utilisé pour permettre des modifications éventuelles dans la bande Bk employée par les utilisateurs Uk, des échanges de bande.

- A la iumbo-trame N+1 :

    ◦ le modem 4 n'émet plus
    ◦ les 3 autres modems occupent chacun une bande :

        ■ 5.B pour les modems 1
        ■ B pour le modem 2 et 3

Cette solution offre un alignement temporelle de super-trame ST2 et de jumbo-trame JT pour tous les utilisateurs. Elle rend possible le partage dynamique et synchrone de ressources entre les émetteurs DVB-S2, la modification introduite ne touchant que les dummy trames par rapport au standard DVB-S2.

En généralisant l'exemple donné à la figure 3, les étapes permettant la construction d'une super-trame ST selon l'invention sont décrites ci-après.

- La structure d'une super-trame ST est définie pour la bande B minimale du système,

  ◦ la structure pour les super-trames ST de bandes n.B est obtenue en multipliant par n le nombre de trames par super-trame de bande B, par exemple si dans la bande B, on a une supertrame ST de K slots de 90 symboles, alors dans la bande n.B pour obtenir la même durée il faut n.K slots de 90 symboles,

- La longueur d'une « dummy » trame introduite pour obtenir la structure de super-trame de durée « fixe » selon l'invention est un multiple de 90 symboles correspondant au slot DVB-S2.

  ◦ Le complément de super-trame se fait par « dummy » slots.

- Les super-trames ST doivent durer le même temps pour les différents utilisateurs Uk quelque soit la bande allouée (n.B).
- Par ordre de priorité, par exemple, les super-trames DVB-S2 complétées sont des ST constituées de :

  1. Trame avec pilotes,
  2. Trame QPSK, puis 8PSK puis 16 APSK et finalement 32 APSK

- Pour la bande B, le temps de garde Tg d'une jumbo-trame est de préférence réalisé par l'insertion d'une « dummy » trame 'classique' (MODCOD = 0).

Selon la configuration, la répartition des « dummy » slots peut être faite uniformément au sein d'une super-trame ou en fin de Super-trame.

Les exemples qui viennent d'être donnés peuvent s'appliquer pour des trames dites normale ou des trames courtes, comportant des pilotes ou non.

### Algorithme de détermination de « dummy » slots

Le cas général prend en compte la cohabitation des ST avec pilotes et des ST sans pilotes.

Il y a 8 types de ST possibles notés $ST_{m.P}$

- m : ordre de la modulation (2 pour QPSK, 3 pour 8PSK...)
- P : 0 : sans pilote, 1 avec pilote

Exemple : $ST_{4.1}$ = ST 16ASPK avec pilote.

Lors de la configuration du système il doit être possible de se limiter qu'à certains types de ST (par exemple cohabitation de $ST_{2.0}$ et $ST_{3.1}$ uniquement).

De la même façon, les trames DVB-S2 sont notés $T_{m.P}$

En se limitant aux types de ST souhaitées, l'algorithme de paramétrage des ST suit, par exemple, les étapes suivantes:

**Etape 1.** Calcul de $N_{Tn\_min.1}$ : nombre de trames avec pilote de plus petit ordre ($T_{n\_min.1}$)

  ◦ $N_{Tn\_min.1}$ doit être un multiple de 5 pour avoir un multiple de 90 symboles (le nombre de pilote par trame est multiple de 36).
  ◦ $L_{Tn\_min.1}$ : nombre symboles de la trame $T_{n\_min.1}$
  ◦ Si dans la configuration choisie il n'y a pas de ST avec pilote alors $N_{Tn\_min.1}$ = 0 dans la suite de l'algorithme.

**Etape 2.** Calcul du $N_{Tn\_max.0}$ : nombre de trames sans pilote de plus grand d'ordre ($ST_{n\_max.0}$):

  ◦ $N_{Tn\_max.0}$ plus petit entier tel que $N_{Tn\_max.0}*L_{Tn\_max.0} > N_{Tn\_min.1}*L_{Tn\_min.1}$
  ◦ $L_{Tk\_max0}$ nombre de symbole par trame sans pilote de modulation d'ordre le plus élevé ($T_{k\_max0}$)
  ◦ $L_{STk\_max0} = N_{Tn\_max.0}·L_{Tk\_max0}$ est le nombre de symboles par ST. $L_{STk\_max0}$ est multiple de 90 car $L_{Tk\_max0}$ l'est.

**Etape 3.** On déduit pour les autres types de trames ($T_{nP}$)

  ◦ avec pilote

▪ leur nombre

▪ leur nombre $N_{Tn.1} = \text{partie\_entiere}(L_{STk\_max0} / (5^* L_{Tn1}))^*5$

→ ceci garantit que le nombre de trame sans pilote par ST est multiple de 5

◦ sans pilote

▪ leur nombre $N_{Tn.0} = \text{partie\_entiere}(L_{STk\_max0} / L_{Tn0})$

**Etape 4.** Calcul du nombre $D_{STnP}$ de « dummy » slot de 90 symboles pour compléter la $ST_{nP}$

◦

◦ $D_{STnP} = (L_{STk\_max0} - N_{Tn.P}^*L_{TnP}) / 90$

▪ $D_{STn\_max0} = 0$

Si pour une même modulation le nombre de trames par ST sans pilote est égal au nombre de trames par ST avec pilote alors il faut choisir une valeur de N plus grande.

Cet algorithme donne le nombre « dummy slots » par ST mais il ne donne pas leur répartition dans la ST. Cette répartition peut être libre à partir du moment que l'émetteur puisse indiquer au récepteur le nombre de « dummy » slots qu'il émet dans une nouvelle « dummy » trame DVB-S2 .

Quelques exemples de Super-trames ST mixte QPSK / 8PSK vont maintenant être donnés.

Un exemple de super-trame est donné dans le tableau 2 mélangeant des trames avec ou sans pilote de modulation QPSK ou 8PSK. Le nombre minimal de trame sans pilote QPSK par super-trame est, dans l'exemple représenté au tableau 2 pour une ST mixte QPSK/8PSK de 347040 symboles/ST, de 10 trames par ST.

| | | | QPSK | 8PSK |
|---|---|---|---|---|
| Pilot | nbTrame | | 10 | 15 |
| | Dummy | **Nb Slots** (dont en-tête) | 158 | 157 |
| No Pilot | nbTrame | | 10 | 16 |
| | Dummy | **Nb Slots** (dont en-tête) | 246 | 0 |

Il est possible d'améliorer l'efficacité de l'alignement temporel des ST lorsque le nombre de dummy slots à ajouter à la ST est supérieur à ceux de trames courtes (une trame QPSK sans pilote a 91 slots) en complétant la trame QSPK sans pilote, par exemple, avec 2 trames courtes QPSK sans pilote et uniquement 54 « dummy » slots ; ou encore tout autre type de trames.

En ayant une ST basée sur une structure à 30 trames QPSK avec pilote l'efficacité est meilleure du fait de la présence de plus de trames sans pilote qu'avec pilote pour un même type de modulation, on obtient le tableau 3, ST mixte QPSK/8PSK de 1 Msymboles/ST :

| | | | QPSK | 8PSK |
|---|---|---|---|---|
| Pilot | nbTrame | | 30 | 45 |
| | Dummy | Nb Slots (dont en-tête) | 233 | 228 |
| Pilo | nbTrame | | 31 | 46 |

| | | QPSK | 8PSK |
|---|---|---|---|
| Dummy | Nb Slots (dont en-tête) | 136 | 0 |

Un autre exemple est donné au tableau 4 où l'idée est de combiner au sein d'une même ST des trames de différente modulation afin d'avoir un multi-ACM optimal. L'exemple du tableau 4 illustre cette idée avec le mélange de trames QPSK et des trames 8PSK.

| Configuration multi-ACM | | 0 | 1 | 2 | 3 | 4 |
|---|---|---|---|---|---|---|
| QPSK | Nb Trame | 0 | 2 | 4 | 6 | 8 |
| 8PSK | Nb Trame | 12 | 9 | 6 | 3 | 0 |
| Dummy | Nb Slots (dont en-tête) | 0 | 1 | 2 | 3 | 4 |
| Nb Symboles | | 260280 | | | | |

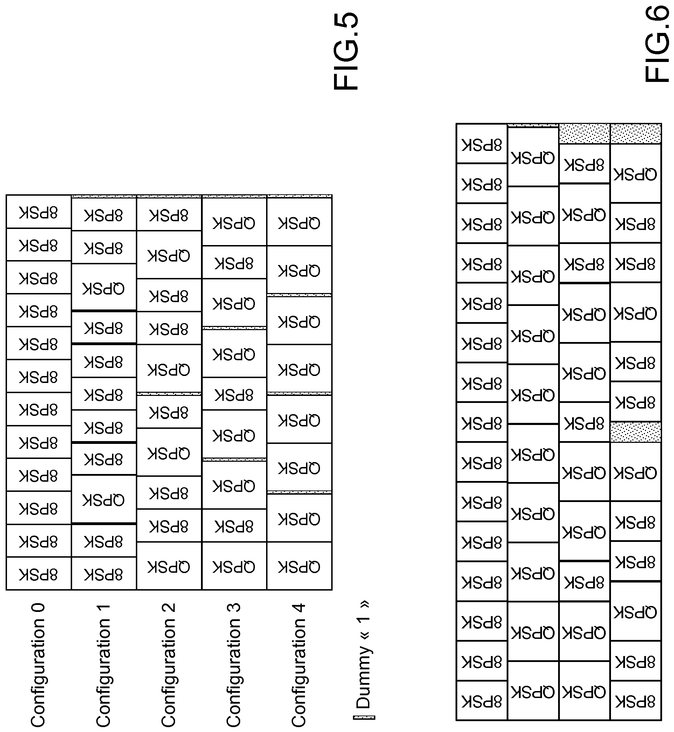

Pour chaque configuration il est possible de constituer la structure des ST en répartissant de manière uniforme les trames de même modulation afin de limiter la gigue comme il est représenté en figure 5.

Le type de « dummy » trame utilisé pour compléter temporellement une ST est une trame dummy d'un seul slot réduit à l'en-tête de la trame Physique (PLHeader) (dummy « 1 »). Cette trame dummy « 1 » est répétée en fonction des configurations ACM. Il est intéressant de dédier ce type de ST multi-ACM pour le NCC dans une topologie étoilée.

La norme DVB-S2 définit des « dummy » trames de 37 slots (en-tête et 36 dummy slots). Afin de permettre à un récepteur de reconnaître une trame selon l'invention, il est possible d'utiliser la signalisation PLS incluse dans le PLEn-tête de la trame DVB-S2 pour indiquer au récepteur le nombre de « dummy « slots » qui sont transmis dans la trame courante.

Pour rappel, le PLS est composé de 2 champs :

- MODCOD (5 bits) : identifie la modulation et le taux de code de la trame :
- TYPE (2 bits) : identifie le type de trame (normale/courte) et la présence/absence de symboles pilote. Champ non significatif pour une « dummy » trame.

Le champ MODCOD a 3 valeurs réservées (ainsi qu'une 4ème pour indiquer que la trame est une « dummy » trame classique). Ces 3 valeurs combiné avec le champ TYPE permet de définir 12 types de « dummy » trame en plus de la « dummy » trame classique.

Afin de permettre à un récepteur DVB-S2 de décoder n'importe quelle porteuse DVB-S2 sans connaître a priori la modulation et le codage de la porteuse il est possible de modifier le champ PLS comme indiqué dans le tableau 5 (extension du champ PLS) suivant:

| Mode | MODCOD | TYPE | Nb Slots (dont en-tête) |
|---|---|---|---|
| « Dummy » 1 | 29 | 00 | 1 |
| | | 01 | 2 |
| | | 10 | 4 |
| | | 11 | 8 |
| « Dummy » 2 | 30 | 00 | 16 |
| | | 01 | 32 |
| | | 10 | 64 |
| | | 11 | réservé |
| « Dummy » 3 | 31 | 00 | réservé |
| | | 01 | réservé |
| | | 10 | réservé |
| | | 11 | réservé |
| Dummy « classique » | 0 | - | 37 |

L'implémentation d'un tramage DVB-S2 synchrone a pour objectif de pouvoir mettre en oeuvre du mécanisme d'adaptation dynamique DRA entre différentes porteuses.

**Exemples de mise en oeuvre**

*Jumbo-trame et super-trames sans pilote*

Pour un système qui ne nécessite que des trames sans pilotes (typiquement système fixe avec des équipements dont le bruit de phase est faible) on en déduit le type de « dummy » trame qu'il faut pour compléter les super trames. Le tableau 6 ci-dessous donne un exemple de structure de super-trames dont la modulation est au mieux la 16 APSK :

| | QPSK | 8PSK | 16 APSK |
|---|---|---|---|
| Nb Trame | 2 | 3 | 4 |
| Dummy | « 2 » | « 1 » | |
| Nb total de symboles (nb slots) | 65160 (724) | | |
| Efficacité | 99.72% | 99.86% | 100% |

Au débit minimum une jumbo-trame est composée de :

- 8 Super-trame
- un temps de garde composé d'une « dummy » trame 'classique' (débordement ou overhead de 0.6%)

   1) Soit un total de 524610 (8*65160+37*90) symboles.
   2) A une fréquence symbole de 524.61 kHz la durée d'une jumbo-trame est de 1s.

*Jumbo-trame et super-trames avec Pilote*

Avec des systèmes en ACM, les symboles « pilote » peuvent être insérées dans la structure de trame de couche physique pour faciliter la synchronisation et aussi à des fins d'estimation de canal.

Le principe appliqué précédemment est reconduit pour les trames avec pilotes. Cependant le nombre de symboles pilotes par trame n'est pas un multiple de 90 :

- 22 blocs de 36 symboles en QSPK
- 14 blocs de 36 symboles en 8SPK
- 11 blocs de 36 symboles en 16ASPK

Pour avoir un multiple de 90 symboles par ST il faut donc au minimum 5 trames avec pilotes (5*36 = 2*90...).

Le type de « dummy » trame qu'il faut pour compléter les super trames est donné dans le tableau 7 qui donne un exemple de structure de super-trames dont la modulation est au mieux la 16 APSK, système DVB-S2 à ST avec pilote à modulation à 4 états maximum (16 APSK):

|  | QPSK | 8PSK | 16 APSK |
|---|---|---|---|
| Nb Trame | 10 | 15 | 20 |
| Dummy | « 10 » | « 9 » |  |
| Nb total de symboles (nb slots) | 333720 | | |

Pour ne pas impacter la fonctionnalité ACM inhérent au DVB-S2 il est préférable d'avoir une ST de l'ordre de qq 100ms (typiquement 250ms). Pour une ST avec pilote de 250ms cela impose un débit minimum de 1.33Mbauds. Au débit minimum une jumbo-trame de 1 seconde est composée de :

- **4** Super-trames,
- un temps de garde composé d'une « dummy » trame 'classique' (débordement de 0.6%)

Pour des applications mobilité les modulations 16 APSK ne seront certainement pas utilisées. La structure de la ST peut donc être optimisée en diminuant la taille des trames « dummy » de compléments dans le tableau 8 :

|  | QPSK | 8PSK |
|---|---|---|
| Nb Trame | 10 | 15 |
| Dummy | « 1 » |  |
| Nb total de symboles (nb slots) | 332910 | |

**Application aux drones**

Un exemple d'application nécessitant un haut débit est le drone où typiquement le débit attendu est de l'ordre de la dizaine de Mbits. Pour cela en préparation mission l'opérateur mission doit allouer (et réserver au niveau satellite) une bande de fréquence répondant à son besoin soit quelques MHz. Si ce même opérateur a maintenant plusieurs drones qui volent simultanément il doit réserver plusieurs bande de fréquence (a priori une pour chaque drone). Pour chaque MHz alloué à un drone l'opérateur devra aussi réserver la ressource satellite équivalente et bien entendu la payer (assez cher 5k$/MHz/mois).

Si un drone n'a rien à transmettre il est économiquement souhaitable qu'il puisse « prêter » sa bande passante à un autre drone qui en a besoin en utilisant le mécanisme de partage dynamique de ressources.

### *Exemple de super-trames*

Pour ce type d'applications mobiles et/ou tactiques, dans la majorité des cas les bilans de liaisons limitent les porteuses DVB-S2 au MODCOD QSPK et 8PSK. Par ailleurs, dans des applications de type mobilité il faut aussi être résistant à l'effet Doppler. Pour répondre à ces problématiques une ST est toujours définie soit avec des pilotes et soit des trames QPSK ($ST_{2,1}$) ou soit des trames 8PSK ($ST_{3,1}$).

Dans ce cas une configuration de base possible est donnée dans le tableau 9: ST mixte QPSK (SSP) / 8PSK (AP) de 227430 symboles/ST.

| | | $ST_{2,1}$ | $ST_{3,1}$ |
|---|---|---|---|
| Nb Trames / ST | | 15 | 10 |
| Dummy | **Nb Slots** (dont en-tête) | 1 | 0 |
| Nb Symboles / ST | | 332910 | |

A un débit minimum de 1 Mbauds une ST dure 333ms.

Au débit minimum une jumbo-trame de 1 seconde est composée de :

- **3** Super-trame
- un temps de garde composé d'une « dummy » trame 'classique' (débordement de 0.6%)

Dans la pratique :

- la porteuse du NCC est certainement à bande fixe car les terminaux doivent pouvoir se synchroniser avec le NCC.
- le NCC émet sa signalisation sur des trames QPSK ¼ (protection optimale). Cependant il n'est pas vraiment envisageable que le NCC émette uniquement en QPSK.

→ Il est préférable de spécifier des ST multi-ACM.

Une configuration multi-ACM possible est donné dans le tableau 10 :

| **Configuration multi-ACM** | | 0 | 1 | 2 | 3 |
|---|---|---|---|---|---|
| **Trame 2,1** | Nb Trame | 10 | 7 | 4 | 0 |
| **Trame 3,1** | Nb Trame | 0 | 4 | 8 | 15 |
| Dummy | **Nb Slots** (dont en-tête) | 1 | 123 | 246 | 0 |
| Nb Symboles/ST | | **332910** | | | |

Dans le plan TF cela peut se construire comme illustré à la figure 6.

La porteuse NCC étant a priori à bande fixe on pourrait utiliser une porteuse DVB-S2 « classique » qui ne soit pas synchrone des autres porteuses du réseau. Cependant pour synchroniser les terminaux entre eux il est nécessaire que chaque terminal se synchronise en premier lieu avec le NCC et donc avec une porteuse DVB-S2 synchrone.

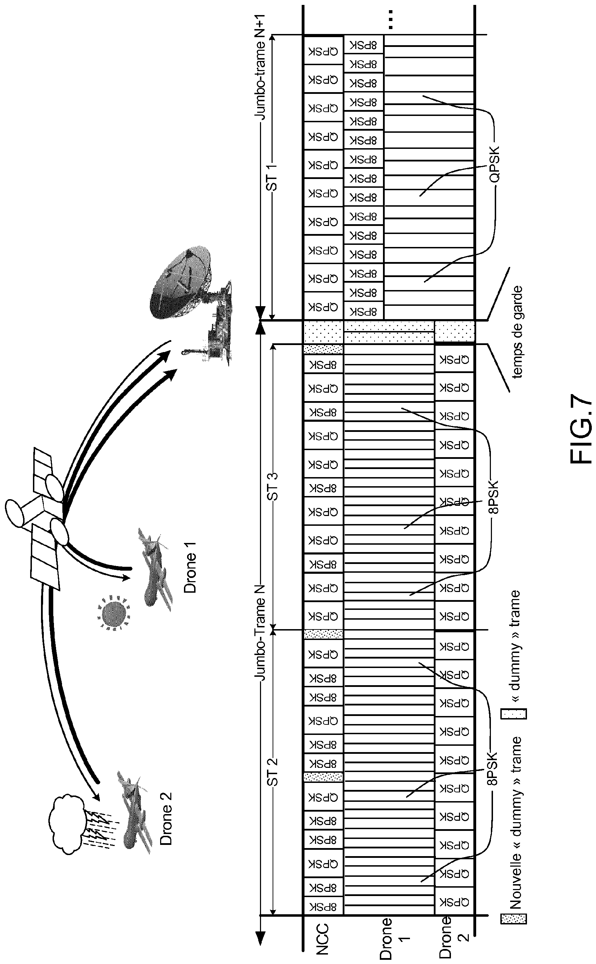

Une utilisation possible des trames en fonction des besoins des terminaux et des conditions de propagation est illustrée à la figure 7 :

- **Jumbo-trame N** :les conditions de propagation sont

  ▪ bonne pour le drone 1 : trames Tx (vers le NCC) et Rx (du NCC) en 8PSK
  ▪ mauvaise pour le drone 2 : trames Tx (vers le NCC) et Rx (du NCC) en QPSK

    ◦ **ST 2 :**

- NCC émet plus de débit à destination du drone 1 (trame 8PSK)
- Drone 1 est en mission → beaucoup de donnée et donc plus de bande allouée
- Drone 2 est « en route » → peu de donnée et donc peu de bande allouée

  ◦ **ST 3** :

- NCC émet a environ le même débit à destination des 2 drones
  → 2 fois plus de trame QSPK (pour drone 2) que de trame 8PSK (pour drone 1)
- Drone 1 est en mission → beaucoup de donnée et donc plus de bande allouée
- Drone 2 est « en route » → peu de donnée et donc peu de bande allouée

- **Jumbo-trame N+1 :** les conditions de propagation sont

- moins bonne pour le drone 1 : trames Tx (vers le NCC) et Rx (du NCC) en QPSK
- toujours mauvaise pour le drone 2 : trames Tx (vers le NCC) et Rx (du NCC) en QPSK

  ◦ **ST 1** :

- Drone 1 a fini sa mission → peu de donnée et donc peu de bande allouée
- Drone 2 commence sa mission → plus de donnée et donc plus de bande allouée.

La structure temporelle des trames selon l'invention permet notamment d'arriver à synchroniser temporellement les porteuses DVB entre elles et définir une référence horaire. L'introduction de « dummy » trame de taille variable permet de structurer les porteuses DVB-S2 en jumbo-trame et super-trame et ainsi de synchroniser plusieurs porteuses DVB-S2 entre elles.

Le partage dynamique de ressources permet d'économiser de la bande passante.

## Revendications

1. - Système de communication utilisant la norme DVB-S2, ledit système comportant au moins k utilisateurs $U_k$, un moyen de gestion et contrôle **caractérisé en ce que** :

   • la super-trame ST1 associée à un premier utilisateur U1 est composée d'au moins une trame T1 composée d'au moins un en-tête, d'une partie données, ladite super-trame ST1 comprenant un nombre d1 de « dummy » trames de taille variables constituées de s1 slots,
   • la super-trame ST2 associée à un deuxième utilisateur U2 est composée d'au moins une trame T2 composée d'au moins un en-tête, d'une partie données, ladite super-trame ST2 comprenant un nombre d2 de « dummy » trames de taille variables constituées de s2 slots,
   • ledit module de gestion et de contrôle est adapté à déterminer dynamiquement le nombre d1 et le nombre d2 de « dummy » trames à introduire afin que la durée temporelle de ST2 soit égale à la durée temporelle de ST1, et
   • chaque utilisateur Uk utilise une super-trame $ST_k$ ayant une même durée, une super-trame est définie en tenant compte de la bande minimale B du système et les super-trames STk de bande nB sont obtenues en multipliant par n le nombre de trames par super-trames de bande B.

2. - Système selon la revendication 1 **caractérisé en ce que** les « dummy » trames de taille variables sont constituées de slots de 90 symboles.

3. - Système selon la revendication 1 **caractérisé en ce que** les « dummy » slots ou créneaux muets sont répartis uniformément dans une super-trame.

4. - Système selon la revendication 1 **caractérisé en ce que** les « dummy » slots sont répartis à la fin d'une super-trame ST composée.

5. - Système selon la revendication 1 **caractérisé en ce qu'**il comprend un module adapté à introduire un nombre donné de créneaux muets entre deux jumbo-trames.

6. - Système selon la revendication 1 **caractérisé en ce qu'**il comprend un module adapté à introduire au niveau de l'en-tête d'une trame une signalisation associée au nombre de créneaux muets.

**7.** - Système selon l'une des revendications 1 à 6 **caractérisé en ce que** les trames sont des trames avec pilotes.

**8.** - Système selon l'une des revendications 1 à 6 **caractérisé en ce que** les trames sont des trames QPSK, 8 PSK, 16 APSK, ou 32 APM.

**9.** - Système selon l'une des revendications 1 à 6 **caractérisé en ce qu'**un utilisateur est un drone.

**10.** - Procédé pour construire une super trame destinée à être utilisée dans un système utilisant la norme DVB-S2 comportant au moins k utilisateurs $U_k$, un moyen de gestion et contrôle **caractérisé en ce qu'**il comporte au moins les étapes suivantes :

> - définir une première super-trame ST1 associée à un premier utilisateur U1 composée d'au moins un en-tête, d'une partie données, ladite super-trame ST1 comprenant un nombre d1 de « dummy » trames de taille variables constituées de s1 slots,
> - définir une deuxième super-trame ST2 associée à un deuxième utilisateur U2 composée d'au moins un en-tête, d'une partie données, ladite super-trame ST2 comprenant un nombre d2 de « dummy » trames de taille variables constituées de s2 slots,
> - déterminer le nombre d1 et le nombre d2 de dummy trames à introduire afin que la durée temporelle de ST2 soit égale à la durée temporelle de ST1,
> - définir une super-trame ST en exécutant les étapes suivantes :
>
> > - on définit la structure d'une super-trame ST pour la bande B minimale du système,
> > - on obtient la structure pour les super-trames ST de bandes n.B en multipliant par n le nombre de trames par super-trame de bande B.

**11.** - Procédé selon la revendication 10 **caractérisé en ce que** pour une supertrame ST de K slots de 90 symboles, dans la bande n.B pour obtenir la même durée on introduit n.K slots de 90 symboles.

**12.** - Procédé selon l'une des revendications 10 ou 11 **caractérisé en ce que** l'on complète une super-trame avec des créneaux muets.

**13.** - Structure de trame pour être utilisée dans des systèmes de communication utilisant la norme DVB-S2 **caractérisée en ce qu'**elle comporte un nombre de trames et un nombre de « dummy » trames disposées de façon à obtenir une super-trame de durée fixe et **en ce que** la durée de la super-trame obtenue est identique pour plusieurs utilisateurs en communication quelque soit la bande de fréquence allouée.


**Patentansprüche**

**1.** Die Norm DVB-S2 nutzendes Kommunikationssystem, mindestens k Nutzer $U_k$, ein Verwaltungs- und Steuerungssystem enthaltend, **dadurch gekennzeichnet, dass**:

> • der Super-Datenübertragungsblock ST1, der einem ersten Nutzer U1 zugewiesen ist, aus mindestens einem Datenübertragungsblock T1, bestehend aus mindestens einem Header, einem Datenabschnitt, wobei der Super-Datenübertragungsblock ST1 eine Anzahl d1 von "Dummy-Datenübertragungsblöcken" variabler Größe enthält, bestehend aus s1 Slots, besteht,
> • der Super-Datenübertragungsblock ST2, der einem zweiten Nutzer U2 zugewiesen ist, aus mindestens einem Datenübertragungsblock T2, bestehend aus mindestens einem Header, einem Datenabschnitt, wobei der Super-Datenübertragungsblock ST2 eine Anzahl d2 "Dummy-Datenübertragungsblöcke" variabler Größe, bestehend aus s2 Slots, besteht,
> • das Verwaltungs- und Steuerungsmodul in der Lage ist, dynamisch die Anzahl der einzufügenden "Dummy-Datenübertragungsblöcke" d1 und d2 zu ermitteln, damit die Zeitdauer von ST2 der Zeitdauer von ST1 entspricht, und
> • jeder Nutzer Uk einen Super-Datenübertragungsblock $ST_k$ von gleicher Dauer nutzt, wobei ein Super-Datenübertragungsblock unter Berücksichtigung des minimalen Bandes B des Systems definiert wird und die Super-Datenübertragungsblöcke STk mit Band nB durch Multiplikation mit n der Anzahl der Datenübertragungsblöcke der Super-Datenübertragungsblöcke mit Band B erzielt werden.

2. System nach Anspruch 1, **dadurch gekennzeichnet, dass** die "Dummy-Datenübertragungsblöcke" variabler Größe aus Slots von 90 Symbolen bestehen.

3. System nach Anspruch 1, **dadurch gekennzeichnet, dass** die "Dummy-Slots" oder stummen Nischen gleichmäßig in einem Super-Datenübertragungsblock verteilt sind.

4. System nach Anspruch 1, **dadurch gekennzeichnet, dass** die "Dummy-Slots" am Ende eines zusammengesetzten Super-Datenübertragungsblocks ST verteilt sind.

5. System nach Anspruch 1, **dadurch gekennzeichnet, dass** es ein Modul enthält, das geeignet ist, eine gegebene Anzahl von stummen Nischen zwischen zwei Jumbo-Datenübertragungsblöcken einzufügen.

6. System nach Anspruch 1, **dadurch gekennzeichnet, dass** es ein Modul enthält, das geeignet ist, im Header eines Datenblocks eine Signalisierung in Verbindung mit der Anzahl der stummen Nischen einzufügen.

7. System nach einem der Ansprüche 1 bis 6, **dadurch gekennzeichnet, dass** es sich bei den Datenübertragungsblöcken um Datenübertragungsblöcke mit Treibern handelt.

8. System nach einem der Ansprüche 1 bis 6, **dadurch gekennzeichnet, dass** es sich bei den Datenübertragungsblöcken um Datenübertragungsblöcke vom Typ QPSK, 8 PSK, 16 APSK, oder 32 APM handelt.

9. System nach einem der Ansprüche 1 bis 6, **dadurch gekennzeichnet, dass** der Nutzer eine Drohne ist.

10. Verfahren zur Schaffung eines Super-Datenübertragungsblocks, zur Verwendung in einem die Norm DVB-S2 nutzenden System bestimmt, beinhaltend mindestens k Nutzer Uk, ein Verwaltungs- und Steuerungsmittel, **dadurch gekennzeichnet, dass** es mindestens folgende Schritte aufweist:

    - Definition eines ersten Super-Datenübertragungsblocks ST1, der einem ersten Nutzer U1 zugewiesen ist, bestehend aus mindestens einem Header, einem Datenabschnitt, wobei der Super-Datenübertragungsblock ST1 eine Anzahl d1 von "Dummy-Datenübertragungsblöcken" variabler Größe enthält, bestehend aus s1 Slots,
    - Definition eines zweiten Super-Datenübertragungsblocks ST2, der einem zweiten Nutzer U2 zugewiesen ist, bestehend aus mindestens einem Header, einem Datenabschnitt, wobei der Super-Datenübertragungsblock ST2 eine Anzahl d2 von "Dummy-Datenübertragungsblöcken" variabler Größe enthält, bestehend aus s2 Slots,
    - dynamische Ermittlung der Anzahl der einzufügenden "Dummy-Datenübertragungsblöcke" d1 und d2, damit die Zeitdauer von ST2 der Zeitdauer von ST1 entspricht,
    - Definition eines Super-Datenübertragungsblocks ST unter Ausführung folgender Schritte:

        - Definition der Struktur eines Super-Datenübertragungsblocks ST für das minimale Band B des Systems,
        - Erzielung der Struktur der Super-Datenübertragungsblöcke ST mit Band n.B durch Multiplikation mit n der Anzahl der Datenübertragungsblöcke pro Super-Datenübertragungsblock mit Band B.

11. Verfahren nach Anspruch 10, **dadurch gekennzeichnet, dass** bei einem Super-Datenübertragungsblock ST mit K Slots von je 90 Symbolen im Band n.B zur Erzielung der gleichen Dauer n.K Slots von je 90 Symbolen eingefügt werden.

12. Verfahren nach einem der Ansprüche 10 oder 11, **dadurch gekennzeichnet, dass** man einen Super-Datenübertragungsblock mit stummen Nischen ergänzt.

13. Datenübertragungsblockstruktur zur Verwendung in die Norm DVB-S2 nutzenden Kommunikationssystemen, **dadurch gekennzeichnet, dass** sie eine Anzahl an Datenübertragungsblöcken und eine Anzahl an "Dummy-Datenübertragungsblöcken" enthält, die so angeordnet sind, dass ein Super-Datenübertragungsblock fester Dauer erzielt wird, und dadurch, dass die Dauer des erzielten Super-Datenübertragungsblocks für mehrere Nutzer in der Kommunikation unabhängig vom zugewiesenen Frequenzband identisch ist.

**Claims**

1. - Communication system using the DVB-S2 standard, the said system comprising at least k users $U_k$, a management and control means **characterized in that**:

   • the super-frame ST1 associated with a first user U1 is composed of at least one frame T1 composed of at least one header, of a data part, the said super-frame ST1 comprising a number d1 of "dummy" variable size frames consisting of s1 slots,
   • the super-frame ST2 associated with a second user U2 is composed of at least one frame T2 composed of at least one header, of a data part, the said super-frame ST2 comprising a number d2 of "dummy" variable size frames consisting of s2 slots,
   • the said management and control module is adapted for dynamically determining the number d1 and the number d2 of "dummy" frames to be introduced so that the temporal duration of ST2 is equal to the temporal duration of ST1, and
   • each user $U_k$ uses a super-frame $ST_k$ having a same duration, a super-frame is defined by taking account of the minimum band B of the system and **in that** the super-frames STk of band nB are obtained by multiplying by n the number of frames per super-frames of band B.

2. - System according to Claim 1, **characterized in that** the "dummy" variable size frames consist of slots of 90 symbols.

3. - System according to Claim 1, **characterized in that** the "dummy" slots or mute timeslots are distributed uniformly in a super-frame.

4. - System according to Claim 1, **characterized in that** the "dummy" slots are distributed at the end of a compound super-frame ST.

5. - System according to Claim 1, **characterized in that** it comprises a module adapted for introducing a given number of mute timeslots between two jumbo-frames.

6. - System according to Claim 1, **characterized in that** it comprises a module adapted for introducing at the level of the header of a frame a signalling associated with the number of mute timeslots.

7. - System according to one of Claims 1 to 6, **characterized in that** the frames are frames with pilots.

8. - System according to one of Claims 1 to 6, **characterized in that** the frames are QPSK, 8 PSK, 16 APSK, or 32 APM frames.

9. - System according to one of Claims 1 to 6, **characterized in that** a user is a drone.

10. - Method for constructing a super-frame intended to be used in a system using the DVB-S2 standard comprising at least k users $U_k$, a management and control means **characterized in that** it comprises at least the following steps:

    - defining a first super-frame ST1 associated with a first user U1 composed of at least one header, of a data part, the said super-frame ST1 comprising a number d1 of "dummy" variable size frames consisting of s1 slots,
    - defining a second super-frame ST2 associated with a second user U2 composed of at least one header, of a data part, the said super-frame ST2 comprising a number d2 of "dummy" variable size frames consisting of s2 slots,
    - determining the number d1 and the number d2 of dummy frames to be introduced so that the temporal duration of ST2 is equal to the temporal duration of ST1,
    - defining a super-frame ST by executing the following steps:

      - the structure of a super-frame ST is defined for the minimum band B of the system,
      - the structure is obtained for the super-frames ST of bands n.B by multiplying by n the number of frames per super-frame of band B.

11. - Method according to Claim 10, **characterized in that** for a super-frame ST of K slots of 90 symbols, in the band n.B to obtain the same duration, n.K slots of 90 symbols are introduced.

**12.** - Method according to one of Claims 10 or 11, **characterized in that** a super-frame is supplemented with mute timeslots.

**13.** - Frame structure to be used in communication systems using the DVB-S2 standard **characterized in that** it comprises a number of frames and a number of "dummy" frames disposed so as to obtain a super-frame of fixed duration and **in that** the duration of the super-frame obtained is identical for several users in communication whatever the allocated frequency band.

Fréquence

B2 utilisateur 2

B1 utilisateur 1

temps

FIG.1

U4

SAT

GW
NCC

R

U1        ST

U2,   U3        ST

U5

U1

11 → 12 →

10, 13

NCC

20 ↔ 21

FIG.2

EP 2 750 368 B1

Fréquence

U1

U1

U2

U2

U2

U3

U2

U3

U3

temps

## FIG.3

ST1

ST2

ST1

DT1

Modem 1 | QPSK 1/2 | QPSK 1/2 | QPSK 2/3 | QPSK 2/3

Modem 2 | 8PSK | 8PSK | 8PSK | 8PSK | 8PSK | 8PSK

Modem 3 | QPSK | QPSK | QPSK | QPSK | QPSK | QPSK | QPSK | QPSK

Modem 4 | QPSK QPSK QPSK QPSK QPSK QPSK | 8PSK 8PSK 8PSK 8PSK 8PSK 8PSK 8PSK 8PSK 8PSK

QPSK 2/3 QPSK 2/3 QPSK 2/3 QPSK 2/3 QPSK 2/3 QPSK 2/3 QPSK 2/3 QPSK 2/3 QPSK 2/3 QPSK 2/3 ...

8PSK | 8PSK | 8PSK

QPSK | QPSK

temps de garde

DT1

QPSK 1/2 | QPSK 1/2

QPSK | QPSK | QPSK | QPSK

## FIG.4

FIG.5

Configuration 0

Configuration 1

Configuration 2

Configuration 3

Configuration 4

Dummy « 1 »

FIG.6

FIG.7